# EUROPEAN PATENT SPECIFICATION

(11) **EP 1 695 671 B1**
(45) Date of publication and mention of the grant of the patent: **26.08.2009**
(21) Application number: 06251038.3
(22) Date of filing: 27.02.2006
(51) Int. Cl.: A61C 8/00

(54) **Dental implant**
Zahnimplantat
Implant dentaire

(30) Priority: 28.02.2005 US 67995
(43) Date of publication of application: 30.08.2006
(60) Divisional application: 09007814.8
(73) Proprietor: Ho, Chih-Chung, Kaohsiung County (TW)
(72) Inventor: Ho, Chih-Chung, Kaohsiung County (TW)
(74) Representative: Nicholls, Michael John

(56) References cited:
- WO-A-83/02555
- DE-A1- 19 545 014
- US-A- 4 738 623
- US-A- 5 437 551
- US-B1- 6 364 663
- US-B1- 6 854 972

## Description

The invention relates to a dental implant, more particularly, a dental implant with proximal plate-like projections.

The occlusal force can be divided into vertical force and horizontal force. The vertical force for the implant is a compression force at the bottom and a shearing force at the sides. The horizontal force is a tipping force for the implant, which means both the ends are most forced in different directions.

Since the horizontal force toward the proximal side is co-bolstered by the adjacent teeth (or implants), such force is less detrimental to the alveolar bone. The dental implant catches the bone to resist the occlusal force. Therefore, to have implants catch enough alveolar bone for the occlusal force, yet keep the alveolar bone from being destroyed is the basic and most important consideration for dental implant design.

Because the advent of titanium dental implant, many dental implants retain the shape of natural root. But as a matter of fact, the supporting mechanisms of the natural tooth and that of the implant are not the same. The natural tooth is suspended in the bone by the ligaments, whereas the implant is "fixed" to the bone. Mimicking the morphology of the root of the tooth does not make sense.

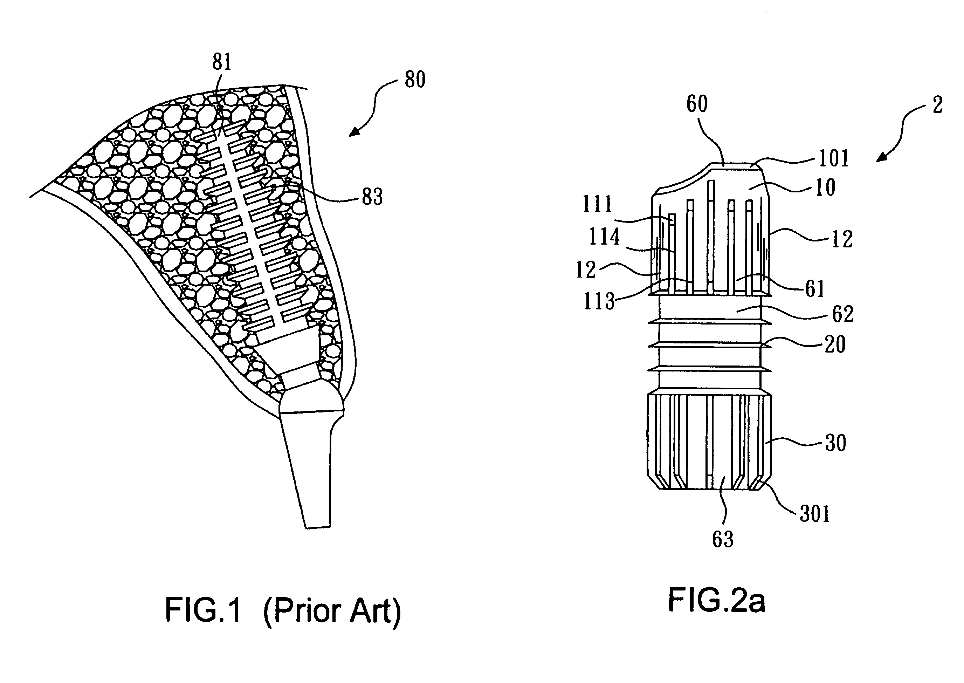

Referring to FIG. 1 of the accompanying drawings, a conventional dental implant 80 comprises a central portion 81 and a plurality of fins 83. The central portion 81 is a tapering shape cylinder. Tapering of the central portion 81 of the dental implant 80 would reduce the capability to resist the vertical force and the horizontal force. And as seen clinically, the deeper portion of alveolar bone always has ample space for the implant. Another drawback for many contemporary implants is the threads or fins 83. The threads or fins are basically horizontal projections from the central portion 81. The fins (horizontal projections) catch bone in such manners that they are significantly less equipped for horizontal forces than for vertical forces. This may explain why the successful rate of implant in the maxilla is always lower than that in the mandible. The implants in the maxilla receive more horizontal force than those in the mandible.

U.S. Pat. No. 4,738,623 discloses a dental implant system which is considered by many dentists to be one of the best implant systems, but it also has the disadvantages mentioned above. Like other implants, the entrance to the bone is the most vulnerable. The conventional dental implant deals with the problem seriously. According to its instruction manual, the conventional dental implant is implanted 1mm ~ 2mm below the alveolar crest. Later, some of the bone is removed, and the abutment and crown is connected to the conventional dental implant. But as is clinically observed, in the long run the bone retreats to the shoulder of the conventional dental implant. Although the material of the implant and that of the abutment post are the same, the abutment post does not get osseointegrated. There may be micro-rotation of the abutment post. An un-osseointegrated post in the bone is a highway for hostile bacteria. In some cases, the bony deteriorations continue, and implant exposures are inevitable. The exposures are often on the horizontal-force-bearing side. Such exposure embarrasses the patient and is an ordeal for the dentist.

US-A-6,854,972 discloses a dental implant in accordance with the pre-characterizing portion of claim 1.

The present invention relates to a dental implant as defined in the independent claims.

The dental implant of the present invention pays more attention to the horizontal force that is usually ignored by the other systems. By the design of the proximal plate-like projection and clearances on buccal and lingual sides, the dental implant may deal with the force from occlusion more correctly.

The proximal plate-like projection catches more bone for the horizontal force and escapes from most of the vertical force. The plate-like projection arises from the cylinder toward distal or mesial direction. On the buccal and lingual sides at the level of the proximal plate-like projection, there are no plate-like projections. Because the buccal and lingual bone plates are always thin and are also the weak points in dental implantology, the bony plates had better not to bear too much force.

The dental implant may further comprise a neck disposed on the first section of the central portion. Continuing with the neck, the clearances and the neck provide more space for the bony plates and carry less force to the plates. The implant provides intact space for the thin plates that are not disturbed by any projection, and would help to meet esthetic demand because the chance of neck exposure is reduced. The implant effectively deals with the horizontal force by the plate-like projection(s) which are surrounded by ample bony structure.

The invention will be further described by way of example with reference to the accompanying drawings, in which:-
FIG. 1 is a conventional dental implant of the prior art after healing and the dot line shows the later retreated condition.
FIG. 2a is a proximal side elevational view of a dental implant according to a first embodiment of the invention.
FIG. 2b is a buccal side elevational view of the dental implant according to the first embodiment of the invention.
FIG. 2c is a downward perspective view of the dental implant according to the first embodiment of the invention.
FIG. 2d is a top plan view of the dental implant according to the first embodiment of the invention.
FIG. 2e is an upward perspective view of the dental implant according to the first embodiment of the invention.
FIG. 2f shows the dental implant according to the first embodiment of the invention after healing.
FIG. 3a is a proximal side elevational view of a dental implant according to a second embodiment of the invention.
FIG. 3b is a buccal side elevational view of the dental implant according to the second embodiment of the invention.
FIG. 3c is a downward perspective view of the dental implant according to the second embodiment of the invention.
FIG. 3d is a top plan view of the dental implant according to the second embodiment of the invention.
FIG. 3e is an upward perspective view of the dental implant according to the second embodiment of the invention.
FIG. 4 is a partial enlarged proximal view of a trimming neck according to the invention.
FIGs. 5a, 5b and 5c are the top plan views of the different arrangements of the proximal plate-like projections.
FIG. 6 is a proximal side elevational view of a dental implant having proximal plate-like projections with declined angle.

Before the description of the dental implant of the invention, some terminology must be clearly defined. The term "lower" is not related to gravity, it means in the deeper bone, and "upper" means it's proximal to the gingival or crown. And "buccal" means buccal or facial, "lingual" means lingual or palatal. "Vertical" means in the direction along with the longitudinal axis of the dental implant, "horizontal" means in the direction that is perpendicular to "vertical".

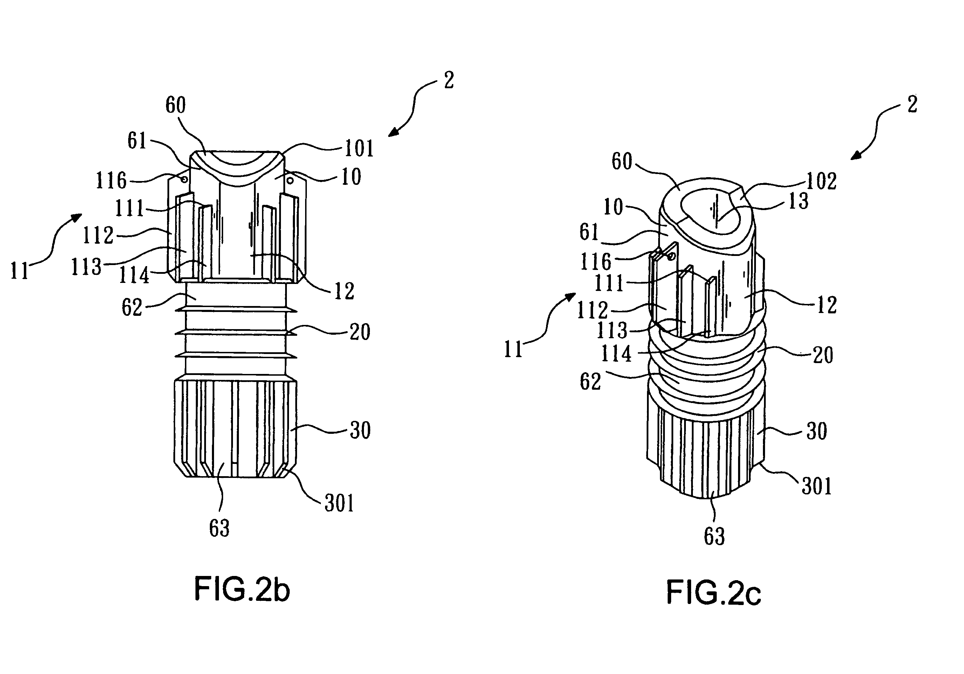

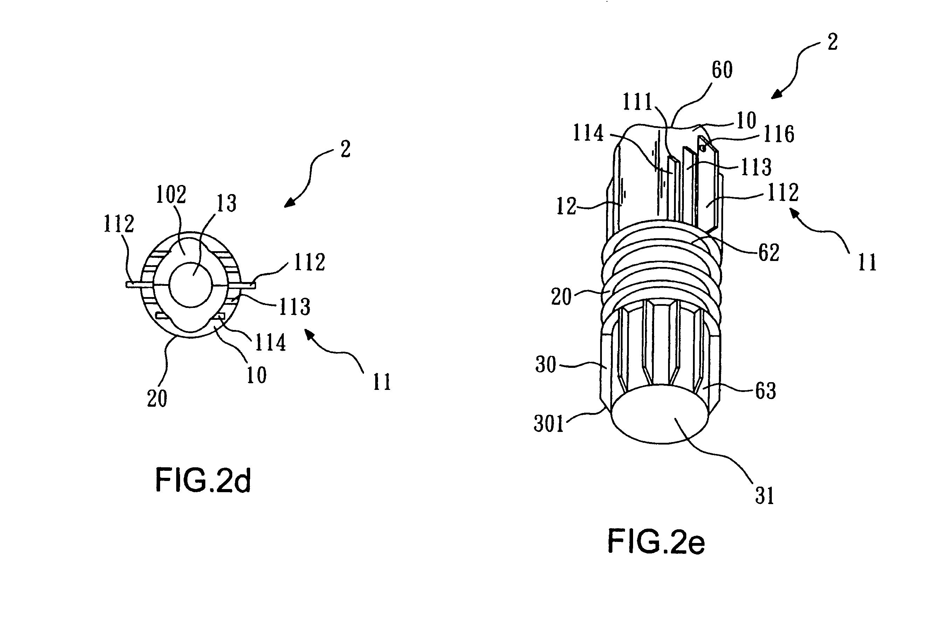

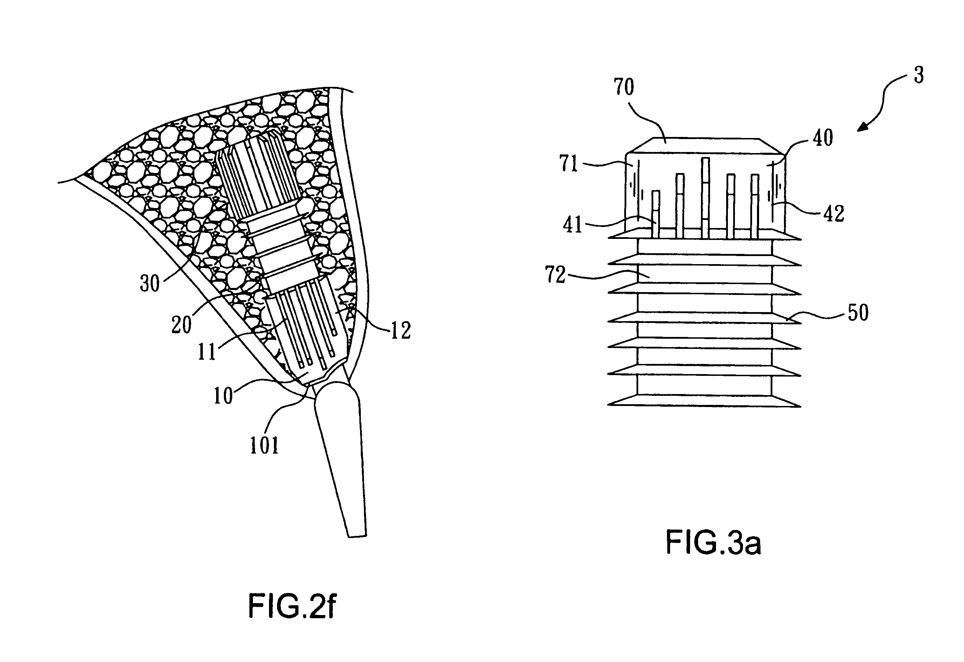

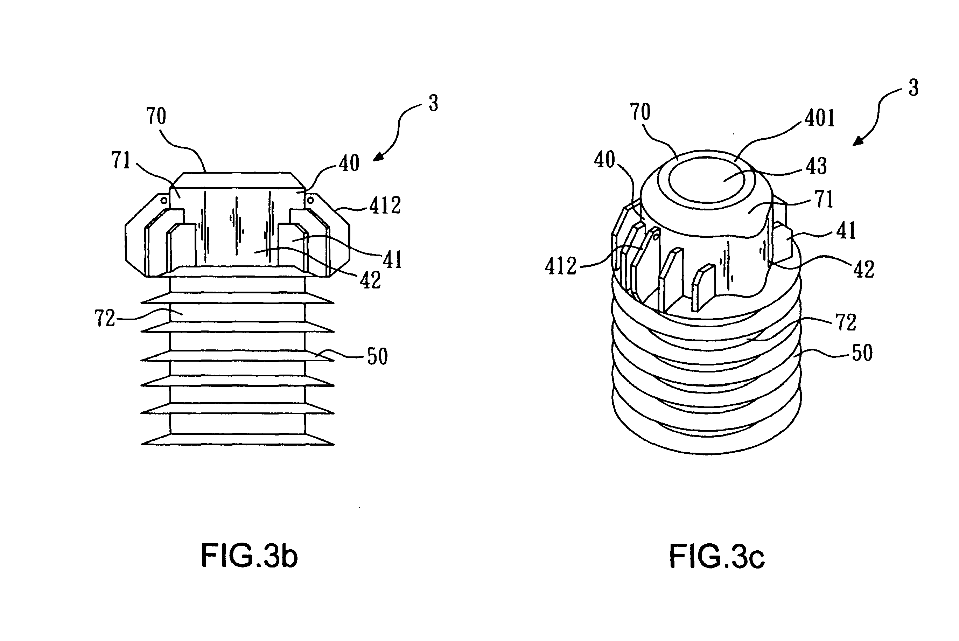

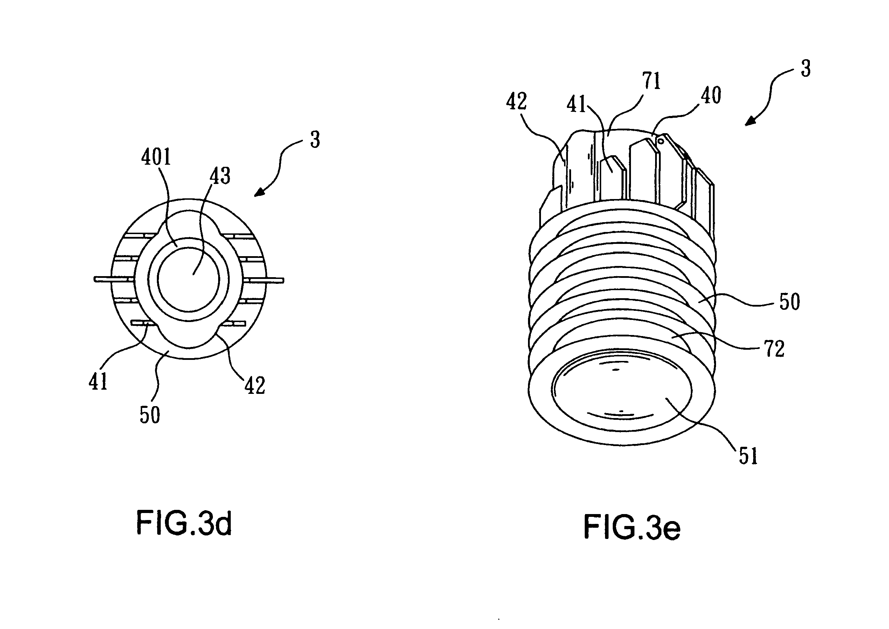

Referring to FIGs. 2a, 2b, 2c, 2d, 2e and 2f, they show a dental implant according to a first embodiment of the invention. The dental implant 2 that would receive more horizontal force than vertical force (from occlusion) is named Type A implant. Generally the Type A implant would be for the maxillary anteriors. Referring to FIGs. 3a, 3b, 3c, 3d and 3e, they show a dental implant according to a second embodiment of the invention. The dental implant 3 that would receive more vertical force is named Type B implant.

The dental implant of the present invention is generally a cylindrical and un-tapered implant that is later to connect an abutment for the prosthesis.

Referring to FIGs. 2a to 2f again, the dental implant 2 comprises: a central portion 60, at least one upper proximal plate-like projection 11, at least one fin 20 and at least one lower proximal plate-like projection 30. The central portion 60 has a first section 61, a second section 62, a third section 63, a horizontal direction and a vertical direction. In the embodiment, the central portion 60 is a cylindrical shape and is not tapered.

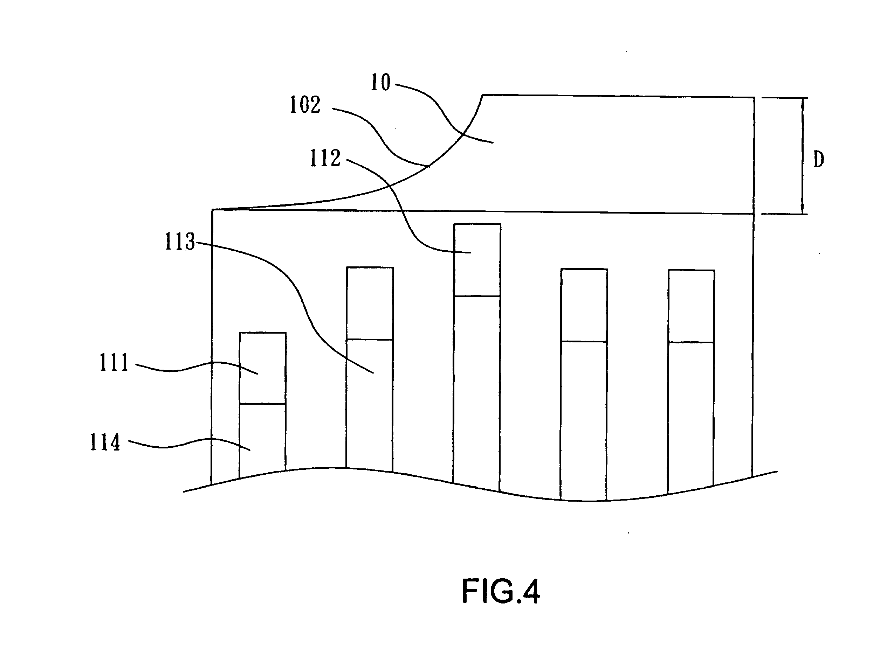

The central portion 60 further comprises a neck 10 disposed on the first section 61. The height of the neck 10 is about 0.5mm to 3.0mm. The neck 10 has an edge 101 with some rounding, and the edge 101 is inward and upward to the longitudinal axis of the dental implant. The neck 10 had better be as narrow as possible if it's mechanically approved. With such design the neck 10 has a rim 102, and the rim 102 on the neck 10 would be narrow. The rim 102 toward the buccal side is trimmed to simulate the curvature of buccal gingival. Referring to FIGs. 2a and 4, the trimming rim 102 begins from proximal sides downwardly to the buccal side, and is preferably concave. The trimming rim 102 would allow the surgeon not to bury the implant deep in the bone without worrying the exposure of dental implant on the buccal side. And the trimming rim 102 is preferably to match the asymmetrically resorbed ridge. The depth of the trimming rim 102 is between 0.5mm to 2mm.

Following the neck 10 are the upper proximal plate-like projection 11 and the buccal and lingual clearances 12. The upper proximal plate-like projection 11 projects from the first section 61 of the central portion 60 along the horizontal direction, and extends along the vertical direction. In the embodiment, a plurality of upper proximal plate-like projections are mounted on the first section 61 of the central portion 60. The upper proximal plate-like projections 11 preferably are comprehensively pruned at the upper edge to form a pruned upper edge 111.

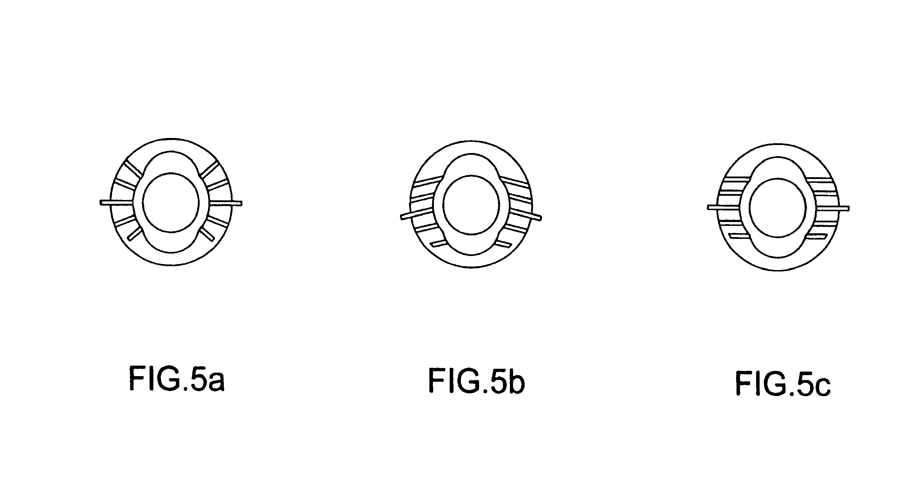

Referring to FIGs. 5a, 5b and 5c, they show the different arrangements of the upper proximal plate-like projection according to the invention. The upper plate-like projections arise from the central portion 60 at roughly 90 degrees to the tangent of the central portion 60 as shown in FIG. 5a, or at projecting angles that are easily manufactured and still can catch a lot of bone for the horizontal force, as shown in FIG. 5b and FIG. 5c. The upper plate-like projections would preferably not extend beyond the tangent line of buccal or lingual border. The plate-like projection(s) are good at catching the bone for the horizontal force and escape from the vertical force. Such design can prevent from overloading.

Referring to FIGs. 2a to 2f again, the upper proximal plate-like projection 11 is disposed on a proximal side of the first section 61, and the first section 61 has a buccal clearance 12 and a lingual clearance 12 without the plate-like projection, the buccal and lingual clearances 12 are respectively disposed on a buccal side and a lingual side of the first section 61. That is, on the buccal and lingual sides at the level of the upper plate-like projection 11, there are no plate-like projections. The clearance 12 is a protrusion. Because the buccal and lingual bone plates are always thin and are also the weak points in dental implantology, the plates had better not to bear too much force. Continuing with the neck 10, the clearances 12 and the neck 10 provide more space for the bony plates and carry less force to the plates.

The dental implant of the invention effectively deals with the horizontal force by the proximal plate-like projections 11 which are surrounded by ample bony structure. Thus the chance of bony deterioration is reduced. The length of the first section 61 with the upper proximal plate-like projection is about 1/4 to 2/5 of the total length of the central portion 60. Because the horizontal force is least felt in the middle section of the central portion, the plate-like projections do not appear in the middle section of the central portion.

The proximal plate-like projections comprise at least one positioning proximal plate-like projection 112, the positioning proximal plate-like projection 112 extends outside the outer diameter of the fin 20. Therefore, the width of the positioning proximal plate-like projection 112 is bigger than that of the other proximal plate-like projection 11. In the embodiment, there are two positioning proximal plate-like projection 112 disposed on the proximal sides for positioning the dental implant 2. And it would be easier to keep the dental implant in the bone with correct direction after surgery.

Furthermore, the proximal plate-like projections comprise at least one pulling proximal plate-like projection 112. In the embodiment, the positioning proximal plate-like projection is the pulling proximal plate-like projection. The length of the pulling proximal plate-like projection 112 is higher than that of the other proximal plate-like projection 11, and the pulling proximal plate-like projection 112 extends to the neck 10. The pulling proximal plate-like projection 112 has a pulling hole 116 for receiving a pulling device to pull the dental implant 2. Besides, The pulling proximal plate-like projection may have a pulling groove for receiving a pulling device to pull the dental implant.

The proximal plate-like projections 11 comprise at least one normal proximal plate-like projection 113. In the embodiment, the length of the normal proximal plate-like projection 113 is lower than that of the pulling proximal plate-like projection 112; and the width of the normal proximal plate-like projection 113 is smaller than that of the positioning proximal plate-like projection 112. That is, the width of the normal proximal plate-like projection 113 is equal to the outer diameter of the fin 20.

The proximal plate-like projections 11 comprise at least one small proximal plate-like projection 114. In the embodiment, the length of the small proximal plate-like projection 114 is lower than that of the normal proximal plate-like projection 113; and the width of the small proximal plate-like projection 114 is smaller than that of the normal proximal plate-like projection 113.

Therefore, the length of the proximal plate-like projections 11 is gradually lower from the pulling proximal plate-like projection 112 to the small proximal plate-like projection 114, and the width of the proximal plate-like projections 11 is gradually small from the positioning proximal plate-like projection 112 to the small proximal plate-like projection 114.

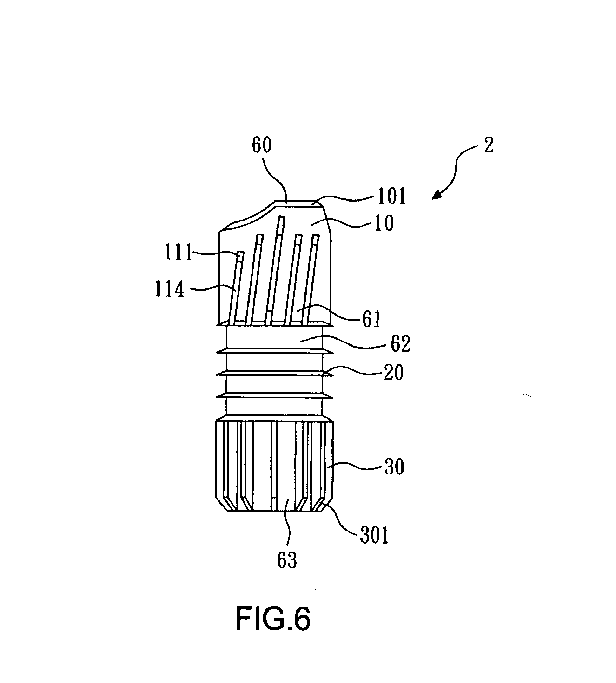

The upper proximal plate-like projection has an angle corresponding to the longitudinal axis of the dental implant. In the first embodiment, the angle of the plate-like projection is 0 degree. However, the angle of the proximal plate-like projection could be between 0 degree to 45 degrees as shown in FIG. 6. That is, the proximal plate-like projections 11 have a declined angle between 0 degree to 45 degrees.

Next to the plate-like projections 11, the fin 20 projects from the second section 62 of the central portion 60 along the horizontal direction. In the embodiment, a plurality of fins are circularly mounted on the peripheral of the second section 62 of the central portion 60. The fins 20 are not tapered. The length of the second section 62 with the fins is about 1/5 to 1/2 of the length of the central portion 60.

The lower proximal plate-like projection 30 is disposed on the third section 63 of the central portion 60. The length of the third section 63 with the lower proximal plate-like projection is about 1/4 to 2/5 of the total length of the central portion 60. The projecting angles of the lower proximal plate-like projection are suggested to be perpendicular to the tangent of the central portion 60. The lower proximal plate-like projection 30 has a pruned lower edge 301. Near a bottom 31 of the central portion 60, the edges of the plate-like projections 30 are pruned to match the bottom of the bony socket; that is, to match the shape of the drill.

The central portion 60 further comprises the bottom 31 and a well 13. The bottom 31 is flat. The well 13 is going to be connected to the abutment and has an opening at the top of the central portion 60.

Referring to FIGs. 3a, 3b, 3c, 3d and 3e, the dental implant 3 comprises: a central portion 70, at least one proximal plate-like projection 41 and at least one fin 50. The central portion 70 has a first section 71, a second section 72, a horizontal direction and a vertical direction. The central portion 70 further comprises a neck 40 disposed on the first section 71. The neck 40 of the second embodiment is similar to the neck 10 of the first embodiment. But the neck 40 here is shorter. The neck 40 comprises a rim 401. The rim 401 is flat or is less trimmed. The length of the neck 40 is between 0.5 to 2mm and the depth of trimming rim is suggested to be 0.5 to 1.2 mm.

The proximal plate-like projection 41 projects from the first section 71 of the central portion 70 along the horizontal direction, and extends along the vertical direction. The proximal plate-like projections 41 and the clearances 42 on buccal and lingual sides are also similar to the previous description in the first embodiment. But the ratio differs. The length of the first section 71 with the proximal plate-like projection 41 is about 1/6 to 2/5 of the total length of the central portion 70. The positioning proximal plate-like projection and the pulling proximal plate-like projection 412 is similar to the previous description in the first embodiment.

The fin 50 projects from the second section 72 of the central portion 70 along the horizontal direction. The central portion 70 further comprises a bottom 51 and a well 43. The fins 50 go down to the bottom 51 without shrinking their diameters. The bottom 51 is concave. The bone at the bottom receives a lot of compression force. The concave bottom 51 disperses the force. This is especially important for the short dental implant with large diameter. It needs a drill specially designed to shape the bottom of the bony socket if any length deeper is crucial.

While the embodiments of the present invention have been illustrated and described, various modifications and improvements can be made by those skilled in the art within the scope of the scope of the invention as defined in the appended claims.

## Claims

1. A dental implant (2) being generally cylindrical and comprising:
a central portion (60, 70) having a first section (61, 71), a second section (62, 72), a horizontal direction and a vertical direction;
at least one proximal projection (11,41) projecting from the first section (61, 71) of the central portion (60, 70) along the horizontal direction and extending along the vertical direction, wherein the proximal projection (11, 41) is disposed on a proximal side of the first section (61, 71), and at least one projection (20, 50), projecting from the second section (62, 72) of the central portion (60, 70) along the horizontal direction; **characterised in that:**
any of the at least one proximal projection is a proximal plate-like projection, and any of the at least one projection projecting from the second section (62,72) is a fin, and the first section (61, 71) has a buccal clearance (12) and a lingual clearance (12) without the proximal plate-like projection (11, 41), the clearances (12) are respectively disposed on a buccal side and a lingual side of the first section (61, 71), and **in that** one of the buccal clearance (12) and the lingual clearance (12) is a protrusion.

2. A dental implant (2), according to claim 1 wherein:
said proximal plate-like projection (11, 41) has a pruned upper edge (111).

3. A dental implant (2) according to claim 1 or 2 wherein:
the at least one proximal plate-like projection (11,41) comprises
at least one proximal plate-like projection (11) projecting from the first section (61) of the central portion (60) along the horizontal direction and extending along the vertical direction; and
at least one lower proximal plate-like projection (30), projecting from a third section (63) of the central portion (60) along the horizontal direction and extending along the vertical direction, the lower proximal plate-like projection (30) having a pruned lower edge.

4. The dental implant according to claim 3, wherein the length of the first section (61,71) with the upper proximal plate-like projection (11) is about 1/4 to 2/5 of the total length of the central portion (60,70).

5. The dental implant according to claim 3 or 4, wherein the length of the third section (63) with the lower proximal plate-like projection (20) is about 1/4 to 2/5 of the total length of the central portion (60,70).

6. The dental implant according to claim 3 wherein the length of the first section (61,71) with the upper proximal plate-like projection (11) is about 1/6 to 2/5 of the total length of the central portion (60,70).

7. A dental implant (2) according to claims 1, 2 or 3 wherein:
the proximal plate-like projections (11, 41) comprise at least one positioning proximal plate-like projection (112, 412), the at least one positioning proximal plate-like projection (112, 412) extending outside the outer diameter of the fin (20, 50) so as to keep the dental implant (2) in the bone with correct direction after surgery.

8. The dental implant (2) according to claim 7, wherein the proximal plate-like projections (11, 41) further comprise at least one pulling proximal plate-like projection (112, 412) and at least one normal proximal plate-like projection (113), the length of the pulling proximal plate-like projection (112, 412) is greater than that of the normal proximal plate-like projection (113), the pulling proximal plate-like projection (112, 412) having a pulling hole (116).

9. The dental implant (2) according to claim 8, wherein the width of the normal proximal plate-like projection (113) is equal to the outer diameter of the fin (20, 50).

10. The dental implant (2) according to claim 8, wherein the proximal plate-like projections (11,41) further comprise at least one small proximal plate-like projection (114), the length of the at least one small proximal plate-like projection (114) is smaller than that of the normal proximal plate-like projection (113) and the width of the small proximal plate-like projection (114) is smaller than that of the normal proximal plate-like projection (113).

11. The dental implant according to anyone of the preceding claims, wherein the central portion (60) further comprises a neck (10,40) disposed on the first section, and the height of the neck (10,40) is about 0.5mm to 3.0mm.

12. The dental implant according to claim 11, wherein the neck (10,40) has a trimming rim (102,401).

13. The dental implant according to claim 12, wherein the trimming rim (102,401) of the neck (10,40) is trimmed from a proximal side toward a buccal side to make concave slopes which simulate the curvature of buccal gingiva.

14. The dental implant according to claim 14 or 15, wherein the depth of the trimming rim (102,401) is from 0.5mm to 2mm.

15. The dental implant according to any one of the preceding claims, wherein the fins (20,50) are next to the proximal plate-like projection (11,41) and the clearances (12).

16. The dental implant according to any one of the preceding claims, wherein the length of the second section (62,72) with the at least one fin (20,50) is about 1/5 to 1/2 of the total length of the central portion (60,70).

17. The dental implant according to any one of the preceding claims, wherein the central portion (60,70) further comprises a concave bottom.

18. The dental implant according to any one of the preceding claims, wherein the at least one fin (20,50) is circularly mounted on the peripheral edge of the central portion (60,70).

## Patentansprüche

1. Dentalimplantat (2), das allgemein zylindrisch beschaffen ist und folgendes umfasst:
einen zentralen Bereich (60, 70) mit einem ersten Abschnitt (61, 71), einem zweiten Abschnitt (62, 72), einer horizontalen Richtung und einer vertikalen Richtung;
mindestens einen proximalen Vorsprung (11, 41), der vom ersten Abschnitt (61, 71) des zentralen Bereiches (60, 70) entlang der horizontalen Richtung vorsteht und sich entlang der vertikalen Richtung erstreckt, wobei der proximale Vorsprung (11, 41) an einer proximalen Seite des ersten Abschnitts (61, 71) angeordnet ist, und mindestens einen Vorsprung (20, 50), der vom zweiten Abschnitt (62, 72) am zentralen Bereich (60, 70) entlang der horizontalen Richtung vorsteht; **dadurch gekennzeichnet, dass**
es sich bei dem mindestens einen proximalen Vorsprung um einen proximalen, plattenartigen Vorsprung handelt und es sich bei dem mindestens einen Vorsprung, der vom zweiten Abschnitt (62, 72) vorsteht, um eine Rippe handelt und der erste Abschnitt (61, 71) einen bukkalen Zwischenraum (12) und einen lingualen Zwischenraum (12) ohne den proximalen plattenartigen Vorsprung (11, 41) aufweist, die Zwischenräume (12) auf einer bukkalen Seite bzw. auf einer lingualen Seite des ersten Abschnitts (61, 71) angeordnet sind und es sich beim bukkalen Zwischenraum (12) oder beim lingualen Zwischenraum (12) um eine Vorwölbung handelt.

2. Dentalimplantat (2) nach Anspruch 1, wobei
der proximale plattenartige Vorsprung (11, 41) einen gekürzten oberen Rand (111) aufweist.

3. Dentalimplantat (2), nach Anspruch 1 oder 2, wobei
der mindestens eine proximale plattenartige Vorsprung (11, 41), folgendes umfasst:
mindestens einen proximalen plattenartigen Vorsprung (11), der vom ersten Abschnitt (61) des zentralen Bereiches (60) entlang der horizontalen Richtung vorsteht und sich entlang der vertikalen Richtung erstreckt; und
mindestens einen unteren proximalen plattenartigen Vorsprung (30), der von einem dritten Abschnitt (63) des zentralen Bereiches (60) entlang der horizontalen Richtung vorsteht und sich entlang der vertikalen Richtung erstreckt, wobei der untere proximale plattenartige Vorsprung (30) einen gekürzten unteren Rand aufweist.

4. Dentalimplantat nach Anspruch 3, wobei die Länge des ersten Abschnitts (61, 71) mit dem oberen proximalen plattenartigen Vorsprung (11) etwa 1/4 bis 2/5 der Gesamtlänge des zentralen Bereiches (60, 70) beträgt.

5. Dentalimplantat nach Anspruch 3 oder 4, wobei die Länge des dritten Abschnitts (63) mit dem unteren proximalen plattenartigen Vorsprung (20) etwa 1/4 bis 2/5 der Gesamtlänge des zentralen Bereiches (60, 70) beträgt.

6. Dentalimplantat nach Anspruch 3, wobei die Länge des ersten Abschnitts (61, 71) mit dem oberen proximalen plattenartigen Vorsprung (11) etwa 1/6 bis 2/5 der Gesamtlänge des zentralen Bereiches (60, 70) beträgt.

7. Dentalimplantat (2) nach Anspruch 1, 2 oder 3, wobei
die proximalen plattenartigen Vorsprünge (11, 41) mindestens einen positionierenden proximalen plattenartigen Vorsprung (112, 412) umfassen, wobei sich der mindestens eine positionierende proximale plattenartige Vorsprung (112, 412) außerhalb des äußeren Durchmessers der Rippe (20, 50) erstreckt, so dass das Dentalimplantat (2) nach dem chirurgischen Eingriff im Knochen in der richtigen Richtung gehalten wird.

8. Dentalimplantat (2) nach Anspruch 7, wobei die proximalen plattenartigen Vorsprünge (11, 41) ferner mindestens einen ziehenden proximalen plattenartigen Vorsprung (112, 412) und mindestens einen normalen proximalen plattenartigen Vorsprung (113) umfassen, wobei die Länge des ziehenden proximalen plattenartigen Vorsprungs (112, 412) größer als die Länge des normalem proximalen plattenartigen Vorsprungs (113) ist und wobei der ziehende proximale plattenartige Vorsprung (112, 412) ein Zugloch (116) aufweist.

9. Dentalimplantat (2) nach Anspruch 8, wobei die Breite des normalen proximalen plattenartigen Vorsprungs (113) gleich groß wie der Außendurchmesser der Rippe (20, 50) ist.

10. Dentalimplantat (2) nach Anspruch 8, wobei die proximalen plattenartigen Vorsprünge (11, 41) ferner mindestens einen kleinen proximalen plattenartigen Vorsprung (114) umfassen, wobei die Länge des mindestens einen kleinen proximalen plattenartigen Vorsprungs (114) kleiner als die Länge des normalen proximalen plattenartigen Vorsprungs (113) ist und die Breite des kleinen proximalen plattenartigen Vorsprungs (114) kleiner als die Breite des normalen proximalen plattenartigen Vorsprungs (113) ist.

11. Dentalimplantat nach einem der vorstehenden Ansprüche, wobei der zentrale Bereich (60) ferner einen am ersten Abschnitt angeordneten Hals (10, 40) umfasst und die Höhe des Halses (10, 40) etwa 0,5 mm bis 3,0 mm beträgt.

12. Dentalimplantat nach Anspruch 11, wobei der Hals (10, 40) einen Trimmrand (102, 401) aufweist.

13. Dentalimplantat nach Anspruch 12, wobei der Trimmrand (102, 401) des Halses (10, 40) von einer proximalen Seite in Richtung zu einer bukkalen Seite zugerichtet ist, um konkave Abschrägungen bereitzustellen, die die Krümmung des bukkalen Zahnfleisches simulieren.

14. Dentalimplantat nach Anspruch 14 oder 15, wobei die Tiefe des Trimmrandes (102, 401) 0,5 mm bis 2 mm beträgt.

15. Dentalimplantat nach einem der vorstehenden Ansprüche, wobei die Rippen (20, 50) sich neben dem proximalen plattenartigen Vorsprung (11, 41) und den Zwischenräumen (12) befinden.

16. Dentalimplantat nach einem der vorstehenden Ansprüche, wobei die Länge des zweiten Abschnitts (62, 72) mit der mindestens einen Rippe (20, 50) etwa 1/5 bis 1/2 der Gesamtlänge des zentralen Bereiches (60, 70) beträgt.

17. Dentalimplantat nach einem der vorstehenden Ansprüche, wobei der zentrale Bereich (60, 70) ferner eine konkave Unterseite umfasst.

18. Dentalimplantat nach einem der vorstehenden Ansprüche, wobei die mindestens eine Rippe (20, 50) kreisförmig am Umfangsrand des zentralen Bereiches (60, 70) angebracht ist.

## Revendications

1. Implant dentaire (2), généralement cylindrique, et comprenant :
une partie centrale (60, 70) ayant une première section (61, 71), une deuxième section (62, 72), une direction horizontale et une direction verticale ;
au moins une saillie proximale (11, 41) faisant saillie à partir de la première section (61, 71) de la partie centrale (60, 70) le long de la direction horizontale et s'étendant le long de la direction verticale, la saillie proximale (11, 41) étant disposée sur un côté proximal de la première section (61, 71), et au moins une saillie (20, 50), faisant saillie à partir de la seconde section (62, 72) de la partie centrale (60, 70) le long de la direction horizontale ;
**caractérisé en ce que :**
l'une quelconque de la au moins une saillie proximale est une saillie proximale en forme de plaque, et l'une quelconque de la au moins une saillie faisant saillie à partir de la seconde section (62, 72) est une ailette, et
la première section (61, 71) a un espace buccal (12) et un espace lingual (12) sans la saillie proximale en forme de plaque (11, 41), les espaces (12) étant respectivement disposés sur un côté buccal et un côté lingual de la première section (61, 71), et **en ce que** l'un de l'espace buccal (12) et de l'espace lingual (12) forme une protubérance.

2. Implant dentaire (2), selon la revendication 1, dans lequel :
ladite saillie proximale en forme de plaque (11, 41) a un bord supérieur en biseau (111).

3. Implant dentaire (2) selon la revendication 1 ou 2, dans lequel :
la au moins une saillie proximale en forme de plaque (11, 41) comprend
au moins une saillie proximale en forme de plaque (11) faisant saillie à partir de la première section (61) de la partie centrale (60) le long de la direction horizontale et s'étendant le long de la direction verticale ; et
au moins une saillie proximale inférieure en forme de plaque (30) faisant saillie à partir d'une troisième section (63) de la partie centrale (60) le long de la direction horizontale et s'étendant le long de la direction verticale, la saillie proximale inférieure en forme de plaque (30) ayant un bord inférieur en biseau.

4. Implant dentaire selon la revendication 3, dans lequel la longueur de la première section (61, 71) avec la saillie proximale supérieure en forme de plaque (11) est d'environ 1/4 à 2/5 de la longueur totale de la partie centrale (60, 70).

5. Implant dentaire selon la revendication 3 ou 4, dans lequel la longueur de la troisième section (63) avec la saillie proximale inférieure en forme de plaque (20) est d'environ 1/4 à 2/5 de la longueur totale de la partie centrale (60, 70).

6. Implant dentaire selon la revendication 3, dans lequel la longueur de la première section (61, 71) avec la saillie proximale supérieure en forme de plaque (11) est d'environ 1/6 à 2/5 de la longueur totale de la partie centrale (60, 70).

7. Implant dentaire (2) selon la revendication 1, 2 ou 3 dans lequel :
les saillies proximales en forme de plaques (11, 41) comprennent au moins une saillie proximale de positionnement en forme de plaque (112, 412), la au moins une saillie proximale de positionnement en forme de plaque (112, 412) s'étendant à l'extérieur du diamètre extérieur de l'ailette (20, 50) de sorte à maintenir l'implant dentaire (2) dans l'os dans la direction correcte après l'intervention.

8. Implant dentaire (2) selon la revendication 7, dans lequel les saillies proximales en forme de plaques (11, 41) comprennent en outre au moins une saillie proximale de traction en forme de plaque (112, 412) et au moins une saillie proximale normale en forme de plaque (113), la longueur de la saillie proximale de traction en forme de plaque (112, 412) étant supérieure à celle de la saillie proximale normale en forme de plaque (113), la saillie proximale de traction en forme de plaque (112, 412) ayant un orifice de traction (116).

9. Implant dentaire (2) selon la revendication 8, dans lequel la largeur de la saillie proximale normale en forme de plaque (113) est égale au diamètre extérieur de l'ailette (20, 50).

10. Implant dentaire (2) selon la revendication 8, dans lequel les saillies proximales en forme de plaques (11, 41) comprennent en outre au moins une petite saillie proximale en forme de plaque (114), la longueur de la au moins une petite saillie proximale en forme de plaque (114) étant inférieure à celle de la saillie proximale normale en forme de plaque (113) et la largeur de la petite saillie proximale en forme de plaque (114) étant inférieure à celle de la saillie proximale normale en forme de plaque (113).

11. Implant dentaire selon l'une quelconque des revendications précédentes, dans lequel la partie centrale (60) comprend en outre un col (10, 40) disposé sur la première section, et la hauteur du col (10, 40) est d'environ 0,5 mm à 3,0 mm.

12. Implant dentaire selon la revendication 11, dans lequel le col (10, 40) a un bord détouré (102, 401).

13. Implant dentaire selon la revendication 12, dans lequel le bord détouré (102, 401) du col (10, 40) est détouré à partir d'un côté proximal vers un côté buccal pour former des pentes concaves qui simulent la courbure de la gencive buccale.

14. Implant dentaire selon la revendication 14 ou 15, dans lequel la profondeur du bord détouré (102, 401) est de 0,5 mm à 2 mm.

15. Implant dentaire selon l'une quelconque des revendications précédentes, dans lequel les ailettes (20, 50) sont proches de la saillie proximale en forme de plaque (11, 41) et des espaces (12).

16. Implant dentaire selon l'une quelconque des revendications précédentes, dans lequel la longueur de la seconde section (62, 72) avec la au moins une ailette (20, 50) est d'environ 1/5 à 1/2 de la longueur totale de la partie centrale (60, 70).

17. Implant dentaire selon l'une quelconque des revendications précédentes, dans lequel la partie centrale (60, 70) comprend en outre un fond concave.

18. Implant dentaire selon l'une quelconque des revendications précédentes, dans lequel la au moins une ailette (20, 50) est montée de façon circulaire sur le bord périphérique de la partie centrale (60, 70).
